(19) **Europäisches Patentamt**
**European Patent Office**
**Office européen des brevets**

(11) **EP 1 679 580 B1**

(12) **EUROPEAN PATENT SPECIFICATION**

(45) Date of publication and mention
of the grant of the patent:
**05.10.2011 Bulletin 2011/40**

(51) Int Cl.:
***G06F 3/033*** *(2006.01)*

(21) Application number: **04030963.5**

(22) Date of filing: **29.12.2004**

(54) **Computer-implemented method and system for scrolling of data using successively decreasing scrolling step sizes**

Rechnerimplementiertes Verfahren und System zum Scrollen von Daten mittels sukzessive abnehmender Scrollschrittlängen

Procédé et système implémenté par ordinateur pour le défilement de données utilisant des étapes successives de défilement de longueur décroissante

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**12.07.2006 Bulletin 2006/28**

(73) Proprietor: **SAP AG**
**69190 Walldorf (DE)**

(72) Inventor: **Reiner, Robert, Dr.**
**69207 Sandhausen (DE)**

(74) Representative: **Müller-Boré & Partner**
**Patentanwälte**
**Grafinger Straße 2**
**81671 München (DE)**

(56) References cited:
**WO-A-2004/097616       WO-A2-2004/053687**
**US-A- 5 495 566          US-A1- 2002 084 981**
**US-A1- 2002 135 602     US-A1- 2004 077 381**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Field of the Invention

The present invention relates to a computer-implemented system for accessing or identifying data in a computer system by a user. More particularly, the invention relates to a method system where data provided in one or more structured or unstructured objects (files, directories, lists, strings, objects, collections, etc.) or other data repositories is selected and displayed on a screen to be accessed or processed upon user interaction with the computer.

### Background of the Invention

In IT (information technology) environments, often times large numbers of data object items are presented on a screen of a computer to be accessed or selected by a user by interaction with the computer through a graphical user interface device connected to the computer. However, it can be very difficult for the user to rapidly and easily identify the desired data object item on the screen. Especially, in a situation where the number or size of data object items to be "scanned" for a specific data object item by the user exceeds the space on the screen or the window/ portion of the screen where the data object items are presented to the user, it is known to provide a scrolling function which allows for a linear (item by item) rolling up or down, or for a section-wise or page-wise rolling up or down. In other words, the user navigates up or down (or to either side in a horizontal orientation) through individual data object items of the data object in predetermined, fixed increments or steps. For long lists, such a serial browsing can be tedious and not very efficient.

There is a need for a technical environment which allows for an improved information management. More specifically, there is a need for appropriately configured network components like computer workstations and a method of controlling such network components which allow for a fast, efficient and user friendly identifying/accessing of data object items of the above mentioned kinds.

US 5,495,566 (Microsoft Corporation) discloses a data processing system capable of scrolling contents of a window. This document refers to two types of scrolling: (i) "scrolling beyond a screen boundary." and (ii) when a user hits either successive Page Down or Page Up keys. The method taught by US 5,495,566 for displaying contents of a window is executed in a data processing system having an input device with an input device indicator, a video display, and a computer program for displaying a window on the window display. The computer program determines a location of the input device indicator on the video display, determines the acceleration of the input device indicator when the location of the input device indicator is within a predefined area of the window, designates a speed for scrolling the contents the window such that the designated speed is proportional to the acceleration and scrolls the content of the window with the designated speed. Alternatively, the computer program receives at least one request in accordance with user input to scroll the contents of the window, determines a number of requests received for scrolling the contents of the window, designates a scroll speed that is inversely proportional to the number of the requests received and scrolls the contents of the window with the designated scroll speed. In a further alternative, the computer program receives at least one request from the input device to display a sequential portion of the contents in response to user input, determines a count of the number of requests received, and determines a time difference between each request received. When the count is above a predefined threshold and the time difference is below a predefined time difference, the computer program displays the contents requested by a last request received. When the count is not above the predefined threshold or when the time is not below the predefined value, the computer program displays the contents requested by each received request with a minimum granularity of a line. The first two of these aspects provide for an improvement in scrolling beyond a screen boundary. The third aspect provides for an improvement for scrolling in response to navigation key input. The first aspect sets the variable speed proportional to the acceleration of the mouse cursor. This concept utilizes the fact that users tend to move the mouse cursor with a large magnitude of acceleration when they wish for the window to scroll rapidly and users tend to move the mouse cursor with a magnitude of acceleration that is small when the users wish for the window to scroll slowly. The second aspect sets a variable scroll speed while performing scrolling beyond a screen boundary based on the number of times that scrolling was initiated during the selection. This approach is responsive to the intentions of the user since users tend to disengage scrolling or scroll in a reverse direction when they wish for the scrolling to slow. Thus, the second aspect sets the scrolling speed inversely proportional to the number of times that scrolling has been initiated or the direction of scrolling has been reversed. The third aspect adjusts the type of scrolling that occurs when a user uses navigation keys. Thus, the third aspect provides two scrolling modes (i) animated scrolling and (ii) jump to scrolling. "Jump to" scrolling refers to immediately displaying the information corresponding to the last navigation key received without displaying the intervening information. The animated scrolling is invoked by a user when the user depresses a navigation key a number of times that is less than a predefined threshold or the time between depression of each navigation key ("time differential") is above a predefined value. However, if the user depresses a navigation key a number of times that is more than the predefined threshold with the time differential being less than the predefined value, the third aspect will perform jump to scrolling.

The third aspect is responsive to the intentions of the user since a user will tend to hit a navigation key rapidly if the user wishes to go directly to a specific page. On the other hand, the user will depress the navigation keys more slowly when the user is unsure of which page of information to display and therefore, wishes to scan the information being scrolled. Therefore, the third aspect switches between animated scrolling and jump to scrolling based on the intentions of the user.

US 2002/0084981 A1 discloses a cursor navigation system and a method for a display where the contents on a display scroll while the cursor remains in a fixed location on the display. This may include no-linear pacing of the cursor movement with the scrolling of the contents. The cursor moves quickly across the display screen when the middle portions of the content are being displayed, but moves comparatively slower as the scrolling approaches the edges of the content.

US 2002/0084981 A1 discloses a mobile communication device comprising a transceiver for transmission and receipt of audio communication, an information display, a scroll button; and scrolling logic to scroll the information displayed on the display at a variable scroll rate responsive to an amount of time the scroll button has been pressed, or an amount of pressure applied to the scroll button. The information can be displayed at a scroll rate increasing responsive to the amount of time the scroll button has been pressed or responsive to the amount of pressure applied to the scroll button.

WO 2004/097616 relates to varying the scrolling speed when scrolling in sets of items, for instance lists provided in portable electronic devices. This document is directed to provide varied scrolling speeds that can be fully controlled by a user by detecting a scrolling action selection and a scrolling speed variation selection and changing the scrolling speed in dependence of these selections.

US 2002/0135602 A1 discloses a scrolling method using a screen pointing device for scrolling through information displayed on a display screen. A first plurality of user selectable scrolling zones is provided on the display screen. Each scrolling zone in the first plurality of scrolling zones is associated with a scrolling technique. The display screen includes a screen pointer controllable by a user with a screen pointing device. The displayed information is scrolled through based on the scrolling technique associated with a selected scrolling zone. Mode selection information is received from a user. The mode selection information indicates that a user has selected a scroll mode. A first movement direction and a first movement velocity are determined based on the received movement information. The screen pointer is moved based on the received movement information. The displayed information on the display screen is scrolled in a direction corresponding to the first movement direction and in an amount based on the first movement velocity. The scrolling amount is greater than the amount of movement of the screen pointer.

WO 2004/053687 A2 relates to a method and an apparatus for presenting a long list of items. The apparatus is designed to display one page of items and a set of browse control tools which include page indicators, the apparatus having user input means. The apparatus is designed to display a new page in response to user input commands. The apparatus is further designed to set a step length, i.e. the distance (number of items) between current page and new page, in response to user input commands. The browse control tools comprise a plurality of hierarchic volumes, each volume comprising a plurality of page indicators.

Thus, it is a problem to provide an alternative for efficiently selecting and displaying data on a screen upon user interaction with the computer.

The present invention solves this problem by a computer implemented method according to claim 1, and a computer program product according to claim 10. Preferred embodiments are defined in the dependent claims.

The invention allows for a efficient data access and presentation of the accessed information. Further, it enhances the ease-of-use and contributes to a coherent presentation of the data.

This concept provides for a more efficient "browsing" through a data object, as - on average - it reaches the sought data object item faster, that is with less user interaction via the user-operated input device than the conventional linear scrolling up or down.

**Presently Preferred Embodiments and Improvements**

In a preferred embodiment of the invention, said data object contains said plurality of N data object items in a data structure, portions of which are being presented in one or more rows or columns in said window of said graphical output device.

Said data object structure can be unsorted or sorted in accordance with one or more criteria. Preferably, in the case of an unsorted object structure, the invention also encompasses an additional control element being arranged to be activated by means of a user-operated input device in order to sort the items according to the desired criterion.

The invention is applicable for and can be utilized with data object structures of the most diverse kind, such as a list, a field, an array, a series of concatenated data objects, or the like.

In a preferred embodiment, said step size s between subsequently presented portions of said data object (DO) is approximately determined by the equation:

$$s := \frac{N}{\#RQX * a}$$

wherein:

- **s** defines the current step size;
- **N** defines the total number data object items (DOI 1 ... m);
- **#RQX** defines the number of previously generated respective first or second request signals (RQ1, RQ2) to effect a series of one or more scroll steps towards the sought data object item (SDOI) among the data object items (DOI 1 ... m); and
- a defines a fixed factor > 1 (preferably a = 2).

In this context, the current step size is understood to be the increment from the portion of data object items presented at a certain point in time in the window to the (next) portion of data object items presented in the window after a first or second request signal has been generated in order to effect a scroll step into the corresponding direction.

The invention allows for said first or second request signals being generated to effect a scroll towards the beginning or towards the end of said data object, respectively. It is understood that the beginning and the end can either be spaced apart from each other in a horizontal direction (by a plurality of columns) or in a vertical direction (by a plurality of rows or lines).

Preferably, said first and second control elements are being provided on said graphical output device adjacent to said presented portion of said data object in said window, preferably at a top, and at a bottom corner, or at a left and at a right corner of said window in which said portion of said data object is presented.

The size of the presented portions of said data object is approximately determined by the window size of said window.

The invention is also related to a computer-implemented system for accessing, processing, and outputting data in a computer network comprising at least one computer that can be operated by a user and that is suited to run the software program as described above in accordance with user input actions, and which is provided with a computer program product carrying out the method as described above.

**Brief Description of the Drawings**

Further details, embodiments, modifications or enhancements of the present invention may be obtained from consideration of the following description of various illustrative embodiments of the invention in conjunction with the drawings in which:

Fig. 1 is a schematic diagram illustrating the data processing system used in accordance with the present invention;

Fig. 2 is an illustration of the accessing of data object items in accordance with the methodology of the prior art;

Fig. 3 is an illustration of the accessing of data object items in accordance with the methodology of the present invention; and

Fig. 4 is a schematic diagram illustrating a Graphical User Interface (GUI) as it can be presented to a user by the system in accordance with the present invention;

**Detailed Description of Preferred Embodiments of the Invention**

Where appropriate, the same reference numbers will be used throughout this detailed description in conjunction with the drawings to refer to the same or like parts.

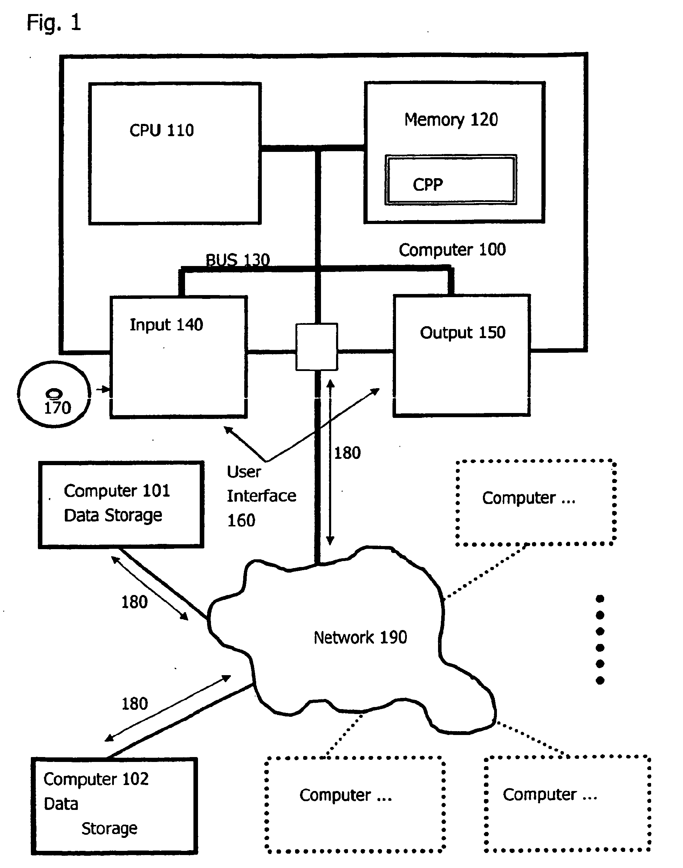

Fig. 1 illustrates a simplified block diagram of a computer network system 10 according to the present invention having a plurality of computer workstations 100, 101, 102 .... The computer workstations 100, 101, 102 ... can be coupled via an (inter-computer) network 190. Each computer workstation 100, 101, 102 ... comprises a processor 110, a memory 120, a bus 130, and, optionally, one or more input devices 140 and output devices 150 (I/O devices) acting as user interface 160, interoperating in a conventionally known manner. The present invention is embodied in a computer program product (hereinafter CPP) residing on a program carrier 170 and/or the memory 120, and generating program signals 180, collectively called a "program".

The computer workstations 101, 102 ... are also referred to as "remote computers". The computer workstations 100, 101, 102 ..., can be, for example, servers, routers, peer devices or other common network nodes, and typically may comprise many or all of the elements described with respect to the computer workstation 100. Hence, the elements 110-180 in the computer workstation 100 collectively illustrate also corresponding elements in the other computer workstations of the network 190.

The computer workstation 100 can be, for example, a conventional personal computer (PC), a desktop or a hand-held device, a multiprocessor computer, a microprocessor-based or programmable consumer electronics device, a minicomputer, a mainframe computer, a personal mobile computing device, a mobile telephone, a portable or stationary personal computer, a palmtop computer or the like.

The processor 110 can be, for example, a central processing unit (CPU), a microcontroller unit (MCU), digital signal processor (DSP), or the like. The memory 120 symbolizes elements or components that temporarily or permanently can store data and instructions. Although the memory 120 is conveniently illustrated as a part of the computer workstation 100, a memory function can also be implemented as a node in the network 190, in the other computers of the network, in the processor 110 itself (e.g., cache, register), or elsewhere.

The memory 120 can be a read only memory (ROM), a random access memory (RAM), or a memory with other access options or capabilities (eg a FLASH memory). The memory 120 may be physically implemented as machine-accessible media, such as, for example: magnetic media, like a hard disk, a floppy disk, or other magnetic disk, a tape, a cassette tape; optical media, like an optical disk (CD-ROM, digital versatile disk - DVD); semiconductor media, like DRAM, SRAM, EPROM, EEPROM, a memory stick, or by any other media. Optionally, the memory 120 is distributed across different media. Portions of the memory 120 can be removable or non-removable. For reading from media and for writing into media, the computer 100 uses devices well known in the art such as, for example, disk drives, tape drives, memory card or memory stick reader/writers, etc.

The memory 120 can store software program support modules such as, for example, a basic input output system (BIOS), an operating system (OS), a program library, a compiler, an interpreter, communication programs, driver, protocol converters, application software programs like text processors, (Internet-) browsers, data base applications etc.

The CPP comprises program instructions and - optionally - data or variables that cause processor 110 to execute the steps forming the methodology of the present invention. The method steps are explained in greater detail below. The CPP defines and controls the operation of the computer workstation 100 and its interaction in the network system 190. For example, and without the intention to be limiting, the CPP can be available as source code in any programming language, and as object code ("binary code") in a compiled presentation. Persons of ordinary skill in the art can use the CPP in connection with any of the above mentioned support modules.

Although the CPP is illustrated as being stored in memory 120, the CPP can also be located elsewhere. For example, the CPP can also be embodied on the program carrier 170.

The program carrier 170 is illustrated as being outside the computer workstation 100. For communicating the CPP to the computer 100, the program carrier 170 is conveniently inserted into the input device 140. The carrier 170 is implemented as any computer readable medium, such as one of the media explained above (cf. memory 120). Generally, the program carrier 170 is an article of manufacture comprising a computer readable medium having computer readable program code means embodied therein for executing the method of the present invention. Further, the program signal(s) 180 can also embody the CPP. The signals 180 travel on the inter-computer network 190 to and from the computer workstation 100. The steps of the computer program product CPP can be executed solely in the computer workstation 100 or can be executed in a distributed manner in one or more of the computers in the network, respectively.

The input device 140 is a device that provides data and instructions for being processed by the computer workstation 100. For example, the device 140 can be a keyboard, a pointing device (e.g., mouse, trackball, cursor direction keys), microphone, joystick, game pad, etc. These devices require human interaction. The input device 140 can also serve to retrieve the program code of the CPP from the program carrier 170.

The output device 150 is a device that presents instructions and data that have been processed. It can be, for example, a monitor or display, cathode ray tube (CRT), flat panel display, liquid crystal display (LCD), or the like. Similar to the input device 140 above, the output device 150 mainly communicates with the user(s), but it can also communicate with further computers or devices.

The input device 140 and the output device 150 can be combined into a single device (eg a touch sensitive screen).

The input/output devices 140 and 150 are coupled to the computer workstation 100 by the bus 130 (as illustrated) or by the network 190 (optional). Interfaces coupled between the elements are also well known in the art. For simplicity, interfaces are not illustrated. An interface can be, for example, a serial port interface, a parallel port interface, a game port, a universal serial bus (USB) interface, an internal or external modem.

The functionalities of the computer and of the program are closely related. Phrases, such as "the computer provides" or "the program provides", are used hereinafter to express actions by one or more computers that is/are controlled by a computer program product in accordance with the invention. The software and the hardware infrastructure of an embodiment of the invention utilize the computer workstation 100 having the graphical display unit 150 and the graphical input unit 140, e.g. a mouse or a trackball. Alternatively, the invention can also be utilized in a hardware infrastructure of the computer workstation 100 having the graphical display unit 150 and an alphanumerical keyboard with arrow keys (up, down, left, or right).

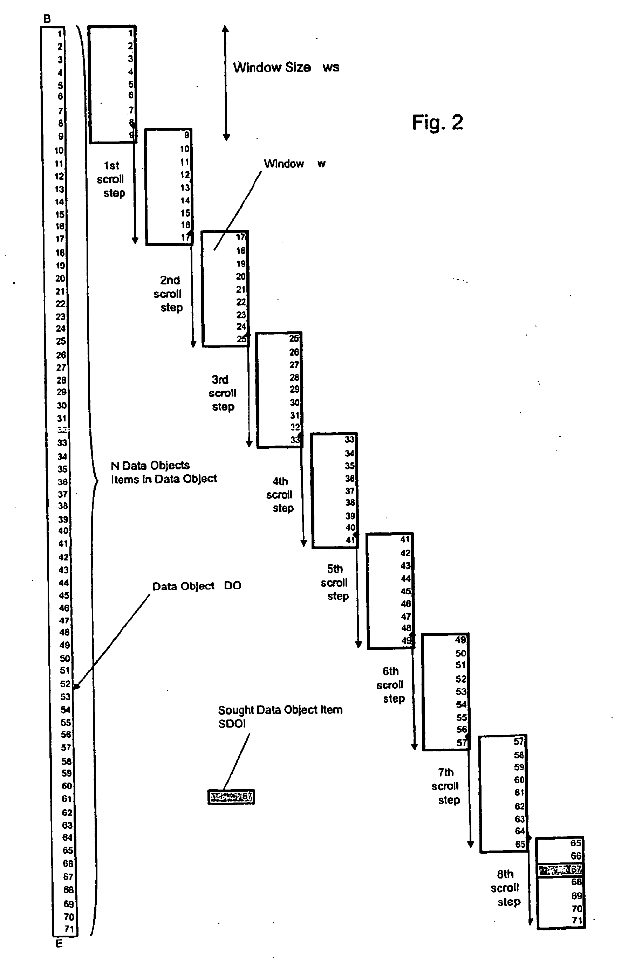

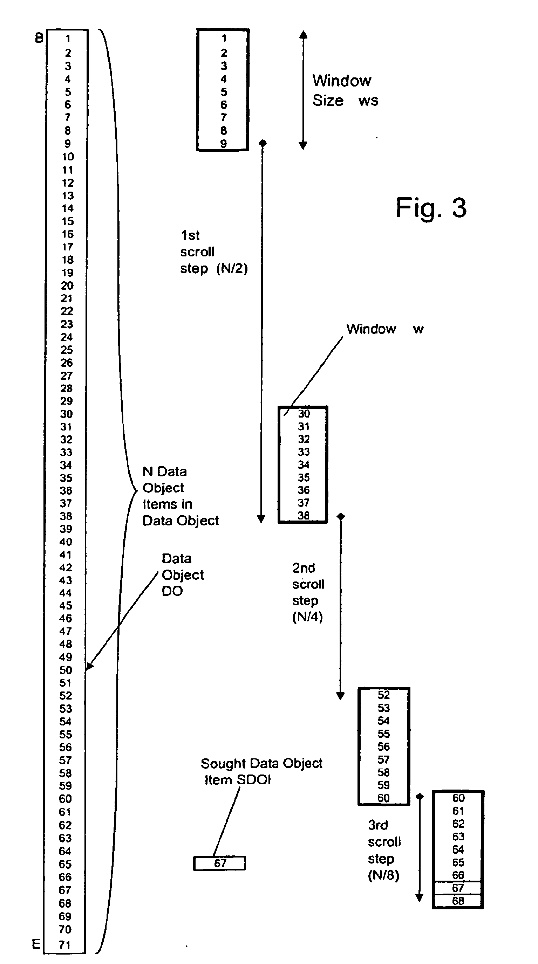

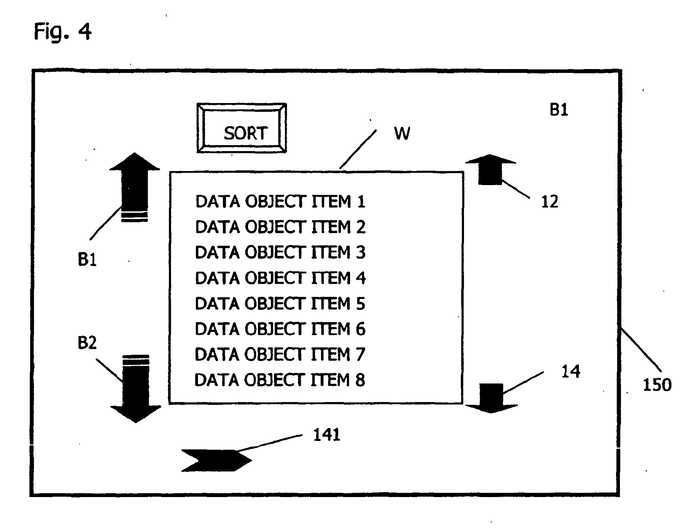

The CPP according to the present invention can be part of a complex software system embedded in a hardware structure. In the following, the present invention will exemplarily be set forth with reference to the illustrations shown in Fig. 2, 3 referring to prior art, and the invention, respectively, and a graphical user interface GUI (see Fig. 4).

On the computer workstation 100, a software code is resident that includes a first program code portion for generating the graphical user interface GUI as it is shown in an exemplary way in Fig. 4. The graphical user interface GUI has several control elements, so-called buttons (i.e. confined areas) on the display 150 that can be operated by a visible mouse pointer 141 which follows the movements carried out by the graphical input unit 140 (see Fig.1). Fig. 2 illustrates a situation with a conventional scroll functionality. A window w provided on a display has a window size ws too small to present all the data object items of the data object DO. In this example, the data object DO has 71 data object items, while the window w has a window size ws capable to present 8 data object items at a time. It is assumed that the user wants to access data object item 67. In order to reach this data object item, the user has to carry out a number of scrolling (down) steps by activating the conventional respective up or down button 12, 14 (see Fig. 4) next to the window w. This will cause the software code to present the next portion (in this instance 8) of the totality of the 71 data object items in the data object. The user has to repeat the activating of the down button eight times until the sought data object item SDOI (here 67) is visualized in the window w.

In accordance with the invention and as depicted in Fig. 4, additionally to the buttons 12, 14, first and second control elements B1, B2 are provided on the screen 150 next to the data object DO presented in the window w. These first and second control elements B1, B2 are effectively similar to the buttons 12, 14 decribed above. However, they provide a different functionality in so far, as upon activation by a user they effect a scroll step into the desired direction which has a predetermined step size s towards said data object item sought (SDOI) which decreases in proportion with the number activations of the first and second control elements B1, B2. Thereby a series of one or more scroll steps towards the sought data object item (SDOI) among the data object items is carried out where the "distance" between the portions of data object items visualized with each scroll step is reduced. To achieve this, upon the initial presentation of the data object in the window w, a integer counter **#RQX** is set to 1. Each time a control element B1 or B2 is activated by the user, this counter is incremented by 1. Once the user has accessed the sought data object item, e.g. by double clicking on it, the counter can be reset.

In the preferred embodiment of the invention, the first step makes a jump approximately to the middle section of the data object, the second step jumps approximately a ¼ of the data object, (up or down, depending on which control element B1 or B2 is activated by the user), the third step is an 1/8 of the data object (again, up or down, depending on which control element B1 or B2 is activated by the user), and so forth until the sought data object item (here item 67) appears in the window presented to the user. Thus, the step size in the preferred embodiment is effectively halved with each up or down button activated by the user. The formula used to calculate the step size mentioned above **(s := N / #RQX * a)** includes the fixed factor a. This factor sets the length ratio from one step to the next step. In order to obtain the above described embodiment of Fig. 3, the factor is a = 2. This sequence of steps utilizing the functionality of the present invention is illustrated in Fig. 3. As is evident, while the prior art approach requires eight steps until the sought data object item SDOI (here item 67) appears in the window presented to the user, the invention requires only three steps to reach this sought data object item SDOI.

The software code further includes a program code portion for sorting the data object items of the data object in accordance with a criterion defined by the user. This facilitates the identifying and accessing of a specific data object. To provide this functionality, the software code includes a program code portion that provides a control element (button) SORT next to the visualized data object in the window w on the screen. When a user activated this button, a sorting algorithm program routine is carried out and the data object items will then be presented in accordance with the sorted order when the first and/or second control buttons are activated by the user.

While the invention has been described with reference to a preferred embodiment, those skilled in the art will understand that various changes may be made and equivalents may be substituted without departing from the scope of the invention. In addition, many modifications may be made to adapt a particular step or structure to the teachings of the invention without departing from its scope. Therefore, it is intended that the invention not be limited to the particular embodiment disclosed, but that the invention will include all embodiments falling within the scope of the appended claims.

**Claims**

1. A computer-implemented method of accessing, processing, and outputting data on a graphical output device (150) for a user, the methods comprising the steps of

    - presenting on said graphical output device (150) a first portion of a data object (DO) in a window (w)

        - said data object (DO) containing a plurality of N data object items (DOI 1 ... m), at least one (SDOI) of said data object items (DOI 1 ... m) being sought by the user,
        - said data object (DO) containing more data object items (DOI 1... m) than are presentable in said window (w) at a given moment in time;

    - providing on said graphical output device (150) buttons (12, 14) for carrying out scrolling steps in order to present the next portion of data object items in the data object (DO), and first and second control elements (B1, B2) in relation to said presented data object (DO), said first and second control elements (B1, B2) being arranged to be activated by means of a user-operated input device (140) in order to generate first and second request signals (RQ1, RQ2), respectively, upon such activation;
    - upon generating respective first or second request signals (RQ1, RQ2)

- effecting a scroll step into a direction corresponding to the respectively generated first and second request signals (RQ1, RQ2) having a predetermined step size s towards said data object item sought (SDOI) by the user, and
- presenting another portion of said data object (DO) in said window (w) at least partially differing from the first portion of said data object (DO),

- said step size s between subsequently presented portions of said data object (DO) decreasing in proportion with the number # of generated first or second request signals (RQ1, RQ2) to effect a series of one or more scroll steps towards the sought data object item (SDOI) among the data object items (DOI 1 ... m).

2. The computer-implemented method according to claim 1, wherein said data object (DO) contains said plurality of N data object items (DOI 1 ... m) in a data structure, portions of which are being presented in one or more rows or columns in said window (w) of said graphical output device (150).

3. The computer-implemented method according to claim 1 or 2, wherein said data object structure is unsorted or sorted in accordance with one or more criteria.

4. The computer-implemented method according to claim 3, wherein, in the case of an unsorted object structure, an additional control element (SORT) is arranged to be activated by means of said user-operated input device (140) in order to sort said plurality of N data object items (DOI 1 ... m) according to the desired criterion.

5. The computer-implemented method according to any of the preceding claims, wherein said data object structure is a list, a field, an array, a series of concatenated data objects, or the like.

6. The computer-implemented method according to any of claims 1 to 5, wherein said step size s between subsequently presented portions of said data object (DO) is approximately determined by the equation:

$$s := \frac{N}{\#RQX * a}$$

wherein:

- **s** defines the current step size;
- **N** defines the total number data object items (DOI 1 ... m);
- **#RQX** defines the number of previously generated respective first or second request signals (RQ1, RQ2) to effect one or more scroll steps towards the sought data object item (SDOI) among the data object items (DOI 1 ... m); and
- **a** defines a fixed factor > 1.

7. The computer-implemented method according to any of claims 1 to 6, wherein said first or second request signals (RQ1, RQ2) are generated to effect a scroll to wards the beginning (B) or towards the end (E) of said data object (DO), respectively.

8. The computer-implemented method according to any of claims 1 to 7, wherein said first or second control elements (B1, B2) are provided on said graphical output device (150) adjacent to said presented portion of said data object (DO) in said window, preferably at a top, and at a bottom corner, or at a left and at a right corner of said window (w) in which said portion of said data object (DO) is presented.

9. The computer-implemented method according to any of claims 1 to 8, wherein the size of the presented portions of said data object (DO) is approximately determined by the window size (ws).

10. A computer program product comprising a software program code capable of carrying out the method described in one or more of the preceding claims.

**Patentansprüche**

1. Rechnerimplementiertes Verfahren zum Zugreifen, Verarbeiten und Ausgeben von Daten auf einer graphischen Ausgabevorrichtung (150) für einen Benutzer, wobei das Verfahren die folgenden Schritte umfasst:

- Darstellen eines ersten Abschnitts eines Datenobjekts (DO) in einem Fenster (w) auf der graphischen Ausgabevorrichtung (150),

- wobei das Datenobjekt (DO) eine Vielzahl von N Datenobjektelementen (DOI 1 ... m) enthält, wobei wenigstens eines (SDOI) der Datenobjektelemente (DOI 1 ... m) von dem Benutzer gesucht wird,
- wobei das Datenobjekt (DO) zu einem gegebenen Zeitpunkt mehr Datenobjektelemente (DOI 1 ... m) enthält als in dem Fenster (w) darstellbar sind;

- Bereitstellen von Knöpfen (12, 14) auf der graphischen Ausgabevorrichtung (150) zum Ausführen von Scrollschritten, um den nächsten Abschnitt der Datenobjektelemente in dem Datenobjekt (DO) darzustellen, und von ersten und zweiten Steuerelementen (B1, B2) in Bezug auf das dargestellte Datenobjekt (DO), wobei die ersten und zweiten Steuerelemente (B1, B2) angeordnet sind, um mittels einer benutzerbedienten Eingabevorrichtung (140) aktiviert zu werden, um nach einer derartigen Aktivierung jeweils erste und zweite Anforderungssignale (RQ1, RQ2) zu erzeugen;

- nach dem Erzeugen jeweiliger erster oder zweiter Anforderungssignale (RQ1, RQ2)

- Herbeiführen eines Scrollschritts in eine Richtung, die den jeweils erzeugten ersten und zweiten Anforderungssignalen (RQ1, RQ2) entspricht, mit einer vorgegebenen Größe s in Richtung des von dem Benutzer gesuchten Datenobjektelements (SDOI), und

Darstellen eines anderen Abschnitts des Datenobjekts (DO) in dem Fenster (w), der sich wenigstens teilweise von dem ersten Abschnitt des Datenobjekts (DO) unterscheidet,

- wobei die Schrittgröße s zwischen nacheinander dargestellten Abschnitten des Datenobjekts (DO) im Verhältnis zu der Anzahl # erzeugter erster und zweiter Anforderungssignale (RQ1, RQ2) abnimmt, um eine Reihe aus einem oder mehreren Scrollschritten in Richtung des gesuchten Datenobjektelements (SDOI) aus den Datenobjektelementen (DOI 1 ... m) herbeizuführen.

2. Rechnerimplementiertes Verfahren nach Anspruch 1, wobei das Datenobjekt (DO) die Vielzahl von N Datenobjektelementen (DOI 1 ... m) in einer Datenstruktur enthält, von der Abschnitte in einer oder mehreren Reihen oder Spalten in dem Fenster (w) der graphischen Ausgabevorrichtung (150) dargestellt werden.

3. Rechnerimplementiertes Verfahren nach Anspruch 1 oder 2, wobei die Datenobjektstruktur unsortiert oder nach einem oder mehreren Kriterien sortiert ist.

4. Rechnerimplementiertes Verfahren nach Anspruch 3, wobei in dem Fall einer unsortierten Objektstruktur ein zusätzliches Steuerelement (SORT) eingerichtet ist, um mittels der benutzerbedienten Eingabevorrichtung (140) aktiviert zu werden, um die Vielzahl von N Datenobjektelementen (DOI 1 ... m) nach dem gewünschten Kriterium zu sortieren.

5. Rechnerimplementiertes Verfahren nach einem der vorhergehenden Ansprüche, wobei die Datenobjektstruktur eine Liste, ein Feld, eine Anordnung, eine Reihe verketteter Datenobjekte oder ähnliches ist.

6. Rechnerimplementiertes Verfahren nach einem der Ansprüche 1 bis 5, wobei die Schrittgröße s zwischen nacheinander dargestellten Abschnitten des Datenobjekts (DO) ungefähr durch die Gleichung:

$$s := \frac{N}{\#RQX * a}$$

bestimmt ist, wobei

- s die aktuelle Schrittgröße definiert;
- N die Gesamtzahl von Datenobjektelementen (DOI 1 ... m) definiert;
- #RQX die Anzahl früher erzeugter jeweiliger erster und zweiter Anforderungssignale (RQ1, RQ2) zum Herbeiführen eines oder mehrerer Scrollschritte in Richtung des gesuchten Datenobjektelements (SDOI) aus den Datenobjektelementen (DOI 1 ... m) definiert; und
- a einen festen Faktor > 1 definiert.

7. Rechnerimplementiertes Verfahren nach einem der Ansprüche 1 bis 6, wobei die ersten oder zweiten Anforderungssignale (RQ1, RQ2) erzeugt werden, um jeweils ein Scrollen in Richtung des Anfangs (B) oder des Endes (E) des Datenobjekts (DO) herbeizuführen.

8. Rechnerimplementiertes Verfahren nach einem der Ansprüche 1 bis 7, wobei die ersten oder zweiten Steuerelemente (B1, B2) auf der graphischen Ausgabevorrichtung (150) neben dem dargestellten Abschnitt des Datenobjekts (DO) in dem Fenster, vorzugsweise in einer oberen und in einer unteren Ecke oder in einer linken und in einer rechten Ecke des Fensters (w) bereitgestellt werden, in dem der Abschnitt des Datenobjekts (DO) dargestellt wird.

9. Rechnerimplementiertes Verfahren nach einem der Ansprüche 1 bis 8, wobei die Größe der dargestellten Abschnitte des Datenobjekts (DO) ungefähr durch die Fenstergröße (ws) bestimmt ist.

10. Computerprogrammprodukt, das einen Softwareprogrammcode umfasst, der fähig ist, das in einem oder mehreren der vorhergehenden Ansprüche beschriebene Verfahren auszuführen.

## Revendications

1. Procédé implémenté par ordinateur d'accès, de traitement et d'émission de données sur un dispositif de sortie graphique (150) pour un utilisateur, le procédé comprenant les étapes de

    - présentation sur ledit dispositif de sortie graphique (150) d'une première partie d'un objet de données (DO) dans une fenêtre (w)

        - ledit objet de données (DO) contenant une pluralité de N éléments d'objets de données (DOI 1...m), au moins un (SDOI) desdits éléments d'objets de données (DOI 1...m) étant recherché par l'utilisateur,
        - ledit objet de données (DO) contenant plus d'éléments d'objets de données (DOI 1...m) que d'éléments présentables dans ladite fenêtre (w) à un moment donné dans le temps ;

    - fourniture sur ledit dispositif de sortie graphique (150) de boutons (12, 14) pour exécuter des étapes de défilement afin de présenter la partie suivante d'éléments d'objets de données dans l'objet de données (DO), et des premier et second éléments de contrôle (B1, B2) par rapport audit objet de données présenté (DO), lesdits premier et second éléments de contrôle (B1, B2) étant disposés pour être activés au moyen d'un dispositif d'entrée actionné par l'utilisateur (140) afin de générer des premier et second signaux de demande (RQ1, RQ2), respectivement, lors de cette activation ;
    - lors de la génération des premier et second signaux de demande respectifs (RQ1, RQ2)

        - réalisation d'une étape de défilement dans une direction correspondant aux respectivement premier et second signaux de demande générés (RQ1, RQ2) ayant une longueur d'étape prédéterminée s vers ledit élément d'objet de données recherché (SDOI) par l'utilisateur, et
        - présentation d'une autre partie dudit objet de données (DO) dans ladite fenêtre (w) divergeant au moins partiellement de la première partie dudit objet de données (DO),

            - ladite longueur d'étape s entre des parties présentées subséquemment dudit objet de données (DO) étant décroissante par rapport au nombre # des premier ou second signaux de demande générés (RQ1, RQ2) pour effectuer une série d'une ou de plusieurs étapes de défilement vers l'élément d'objet de données recherché (SDOI) parmi les éléments d'objets de données (DOI 1...m).

2. Procédé implémenté par ordinateur selon la revendication 1, dans lequel ledit objet de données (DO) contient ladite pluralité de N éléments d'objets de données (DOI 1...m) dans une structure de données, dont des parties sont présentées dans une ou plusieurs rangées ou colonnes dans ladite fenêtre (w) dudit dispositif de sortie graphique (150).

3. Procédé implémenté par ordinateur selon les revendications 1 ou 2, dans lequel ladite structure d'objets de données est non triée ou triée selon un ou plusieurs critères.

4. Procédé implémenté par ordinateur selon la revendication 3, dans lequel, dans le cas d'une structure d'objets non triée, un élément de contrôle supplémentaire (SORT) est disposé pour être activé au moyen dudit dispositif d'entrée actionné par l'utilisateur (140) afin de trier ladite pluralité de N éléments d'objets de données (DOI 1...m) selon le critère souhaité.

5. Procédé implémenté par ordinateur selon l'une quelconque des revendications précédentes, dans lequel ladite structure d'objets de données est une liste, un champ, un groupement, une série d'objets de données concaténés, ou similaires.

6. Procédé implémenté par ordinateur selon l'une quelconque des revendications 1 à 5, dans lequel ladite longueur d'étape s entre des parties présentées subséquemment dudit objet de données (DO) est approximativement déterminée par l'équation :

$$s := \frac{N}{\# RQX * a}$$

dans laquelle :

    - s définit la longueur d'étape actuelle ;
    - N définit le nombre total d'éléments d'objets de données (DOI 1...m);
    - #RQX définit le nombre des premier ou second signaux de demande respectifs générés précédemment (RQ1, RQ2) pour effectuer une ou plusieurs étapes de défilement vers l'élément d'objet de données recherché (SDOI) parmi les éléments d'objets de données (DOI 1...m) ; et
    - a définit un facteur fixe > 1.

7. Procédé implémenté par ordinateur selon l'une quelconque des revendications 1 à 6, dans lequel lesdits premier ou second signaux de demande (RQ1, RQ2) sont générés pour effectuer un défilement vers le début (B) ou vers la fin (E) dudit objet de données (DO) respectivement.

8. Procédé implémenté par ordinateur selon l'une quelconque des revendications 1 à 7, dans lequel lesdits premier ou second éléments de contrôle (B1, B2) sont fournis sur ledit dispositif de sortie graphique (150) de manière adjacente à ladite partie présentée dudit objet de données (DO) dans ladite fenêtre, de préférence dans un coin supérieur et dans un coin inférieur, ou dans un coin gauche et dans un coin droite de ladite fenêtre (w) dans laquelle est présentée ladite partie dudit objet de données (DO).

9. Procédé implémenté par ordinateur selon l'une quelconque des revendications 1 à 8, dans lequel la dimension des parties présentées dudit objet de données (DO) est approximativement déterminée par la dimension de fenêtre (ws).

10. Produit de programme informatique comprenant un code de programme logiciel capable d'effectuer le procédé décrit dans une ou plusieurs des revendications précédentes.

## Fig. 1

**Fig. 2**

Window Size  ws

Window  w

1st scroll step

2nd scroll step

3rd scroll step

4th scroll step

5th scroll step

6th scroll step

7th scroll step

8th scroll step

N Data Objects
Items in Data Object

Data Object  DO

Sought Data Object Item
SDOI

Fig. 3

Fig. 4

SORT

W

B1

DATA OBJECT ITEM 1
DATA OBJECT ITEM 2
DATA OBJECT ITEM 3
DATA OBJECT ITEM 4
DATA OBJECT ITEM 5
DATA OBJECT ITEM 6
DATA OBJECT ITEM 7
DATA OBJECT ITEM 8

B1

B2

12

14

150

141

**EP 1 679 580 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

* US 5495566 A